# EUROPÄISCHE PATENTANMELDUNG

(11) **EP 0 848 473 A1**
(43) Veröffentlichungstag der Anmeldung: **17.06.1998**
(21) Anmeldenummer: 97121646.0
(22) Anmeldetag: 09.12.1997
(51) Int. Cl.: H02J 7/00

(54) **Ladeeinrichtung**

(30) Priorität: 10.12.1996 DE 19651152
(71) Anmelder: MOTOROLA, INC., Schaumburg, IL 60196 (US)
(72) Erfinder: Birkl, Gerard-Emile, D-12051 Berlin (DE)
(74) Vertreter: Richardt, Markus Albert

(57) **Zusammenfassung**

Es wird eine Ladeeinrichtung (1) vorgeschlagen, die zum Laden eines Akkumulators (5) eines Funkgerätes (10) dient. Die Ladeeinrichtung (1) umfaßt eine Akkumulatoraufnahme (15) für den Akkumulator (5) und Ladekontakte (20) in der Akkumulatoraufnahme (15) zum Laden des Akkumulators (5). Weiterhin weist die Ladeeinrichtung (1) mindestens eine Anschlußleitung (25, 30) zum Anschluß an eine Spannungsquelle auf. Weiterhin ist in der Ladeeinrichtung (1) eine Geräteaufnahme (35) für das Funkgerät (10) vorgesehen. In der Geräteaufnahme (35) für das Funkgerät (10) sind Kontakte (40) zur Stromversorgung des Funkgerätes (10) angeordnet. Während der Stromversorgung des in die Geräteaufnahme (35) eingesetzten Funkgerätes (10) ist der Akkumulator (5) des Funkgerätes (10) in der Akkumulatoraufnahme (15) aufladbar.

## Beschreibung

### Stand der Technik

Die Erfindung geht von einer Ladeeinrichtung nach der Gattung des Hauptanspruchs aus.

Aus der EP 05 74 753 A2 ist bereits eine Ladeeinrichtung bekannt, die zum Aufladen eines Akkumulators eines Mobilgerätes dient. Dabei weist die Ladeeinrichtung eine Aufnahme für den Akkumulator des Mobilgerätes auf. In der Aufnahme sind Ladekontakte zum Laden des Akkumulators vorgesehen. Die Ladeeinrichtung weist außerdem eine Anschlußleitung zum Anschluß an eine Wechselspannungsquelle auf.

### Vorteile der Erfindung

Die erfindungsgemäße Ladeeinrichtung mit den Merkmalen des Hauptanspruchs hat demgegenüber den Vorteil, daß das Funkgerät auch dann betrieben werden kann, wenn sein Akkumulator leer oder nicht genügend aufgeladen ist. Auf diese Weise entfällt für den Benutzer die Wartezeit, bis der Akkumulator wieder genügend aufgeladen ist und außerdem wird die Funktionalität der Ladeeinrichtung erhöht, da sie sowohl zur Stromversorgung des Funkgerätes, als auch zum gleichzeitigen Laden des Akkumulators des Funkgerätes eingesetzt werden kann. Die erhöhte Funktionalität der Ladeeinrichtung wird zudem auf einfache Weise erreicht, wobei kein nennenswerter Zusatzaufwand erforderlich ist.

Durch die in den Unteransprüchen aufgeführten Maßnahmen sind vorteilhafte Weiterbildungen und Verbesserungen der im Hauptanspruch angegebenen Ladeeinrichtung möglich.

Besonders vorteilhaft ist es, der Ladeeinrichtung über eine Anschlußleitung eine Gleichspannung insbesondere einer Kraftfahrzeugspannungsversorgung zuzuführen. Auf diese Weise ist der Benutzer nicht auf einen Zugang zur Netzspannung angewiesen und kann ortsunabhängig über seine Autobatterie den Akkumulator aufladen und gleichzeitig das Funkgerät betreiben. Somit wird ein mobiler Betrieb der Ladeeinrichtung ermöglicht.

Vorteilhaft ist außerdem, daß sowohl eine Anschlußleitung zur Zuführung einer Gleichspannung, als auch eine Anschlußleitung zur Zuführung einer Netzspannung vorgesehen sein kann, so daß die Ladeeinrichtung bezüglich der Spannungsversorgung eine hohe Flexibilität aufweist.

Vorteilhaft ist die Verbindung der Anschlußleitung für die Netzspannung mit der Anschlußleitung für die Gleichspannung über eine Diodenschutzschaltung. Auf diese Weise wird verhindert, daß an der nicht mit einer Spannungsversorgung verbundenen Anschlußleitung eine Spannung von der mit einer Spannungsversorgung verbundenen anderen Anschlußleitung anliegt.

### Zeichnung

Ein Ausführungsbeispiel der Erfindung ist in der Zeichnung dargestellt und in der nachfolgenden Beschreibung näher erläutert. Es zeigen
Figur 1 eine erfindungsgemäße Ladeeinrichtung und
Figur 2 ein Blockschaltbild der zugehörigen Ladeschaltung.

### Beschreibung des Ausführungsbeispiels

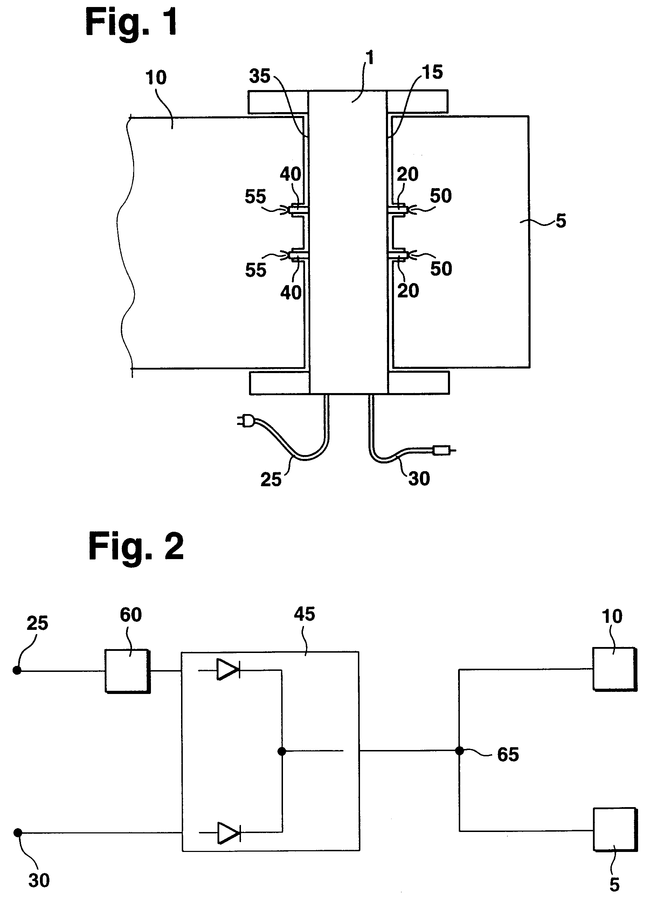

In Figur 1 kennzeichnet 1 eine Ladeeinrichtung, die eine Akkumulatoraufnahme 15 und eine Geräteaufnahme 35 aufweist. In der Akkumulatoraufnahme 15 sind zwei Ladekontakte 20 angeordnet und in der Geräteaufnahme 35 sind zwei Stromversorgungskontakte 40 angeordnet. In die Akkumulatoraufnahme 15 ist ein Akkumulator 5 eines Funkgerätes 10 so eingeführt, daß die Ladekontakte 20 mit entsprechenden Gegenkontakten 50 des Akkumulators 5 kontaktieren. In die Geräteaufnahme 35 ist das Funkgerät 10 so eingeführt, daß die Stromversorgungskontakte 40 mit entsprechenden Gegenkontakten 55 des Funkgerätes 10 kontaktieren. Die Ladeeinrichtung 1 weist außerdem eine erste Anschlußleitung 25 zum Anschluß an ein Wechselspannungsnetz und eine zweite Anschlußleitung 30 zum Anschluß an eine Kraftfahrzeugbatterie auf.

Zur Ladung des Akkumulators 5 und zur Stromversorgung des Funkgerätes 10 weist die Ladeeinrichtung 1 die in Figur 2 als Blockschaltbild dargestellte Ladeschaltung auf. Dabei ist die erste Anschlußleitung 25 über einen Wechselstrom-/Gleichstromwandler 60 und die zweite Anschlußleitung 30 direkt mit jeweils einem Eingang einer Diodenschutzschaltung 45 verbunden, die in jedem der beiden Stromflußzweige eine in Durchlaßrichtung gepolte Diode vorsieht, wobei die Kathoden der beiden Dioden auf einen gemeinsamen Einspeisepunkt 65 geführt sind, an den sowohl das Funkgerät 10, als auch der Akkumulator 5 angeschlossen sind.

Über die Gegenkontakte 50 des Akkumulators 5 wird der Akkumulator 5 aufgeladen und über die Gegenkontakte 55 des Funkgerätes 10 wird das Funkgerät 10 während des Ladevorgangs des Akkumulators 5 mit Strom versorgt und somit betriebsbereit gehalten. Über die erste Anschlußleitung 25 kann die Ladeeinrichtung 1 zur Stromversorgung an eine Netzwechselspannungsquelle angeschlossen werden, wobei die zum Betrieb des Funkgerätes 10 und zum Laden des Akkumulators 5 benötigte Gleichspannung durch entsprechende Umwandlung der Netzspannung im Wechselstrom-/Gleichstromwandler 60 erzeugt wird. Eine solche Wechselstrom-/Gleichstromwandlung ist für den Anschluß der Ladeeinrichtung 1 über die zweite Anschlußleitung 30 an die Kraftfahrzeugbatterie als Gleichstromquelle nicht erforderlich. Durch die Diodenschutzschaltung 45 wird verhindert, daß auf einer nicht mit einer Spannungsversorgung verbundenen Anschlußleitung eine Spannung anliegt, wenn die andere Anschlußleitung mit einer Spannungsversorgung verbunden ist.

Mit der erfindungsgemäßen Ladeeinrichtung 1 wird ein in die Akkumulatoraufnahme 15 eingeführter Akkumulator 5 natürlich auch dann aufgeladen, wenn kein Funkgerät 10 in die Geräteaufnahme 35 eingeführt ist und ein in die Geräteaufnahme 35 eingeführtes Funkgerät 10 wird auch dann mit Strom versorgt, wenn kein Akkumulator 5 in die Akkumulatoraufnahme 15 eingeführt ist.

## Patentansprüche

1. Ladeeinrichtung (1) für einen Akkumulator (5) eines Funkgerätes (10), mit einer Akkumulatoraufnahme (15) für den Akkumulator (5) und Ladekontakten (20) in der Akkumulatoraufnahme (15) zum Laden des Akkumulators (5), und mit mindestens einer Anschlußleitung (25, 30) zum Anschluß an eine Spannungsquelle, dadurch gekennzeichnet, daß eine Geräteaufnahme (35) für das Funkgerät (10) vorgesehen ist, daß in der Geräteaufnahme (35) für das Funkgerät (10) Kontakte (40) zur Stromversorgung des Funkgerätes (10) angeordnet sind und daß während der Stromversorgung des in die Geräteaufnahme (35) eingesetzten Funkgerätes (10) der Akkumulator (5) des Funkgerätes (10) in der Akkumulatoraufnahme (15) aufladbar ist.

2. Ladeeinrichtung (1) nach Anspruch 1, dadurch gekennzeichnet, daß der Ladeeinrichtung (1) über eine Anschlußleitung (25) eine Netzspannung zuführbar ist und daß in der Ladeeinrichtung (1) eine Wandlung der Netzspannung in eine Gleichspannung erfolgt.

3. Ladeeinrichtung (1) nach Anspruch 1 oder 2, dadurch gekennzeichnet, daß der Ladeeinrichtung (1) über eine Anschlußleitung (30) eine Gleichspannung, insbesondere einer Kraftfahrzeugspannungsversorgung zuführbar ist.

4. Ladeeinrichtung (1) nach Anspruch 3, dadurch gekennzeichnet, daß die Anschlußleitung (25) für die Netzspannung und die Anschlußleitung (30) für die Gleichspannung über eine Diodenschutzschaltung (45) miteinander verbunden sind.
